# EUROPÄISCHE PATENTSCHRIFT

(11) **EP 2 219 810 B1**
(45) Veröffentlichungstag und Bekanntmachung des Hinweises auf die Patenterteilung: **14.03.2012**
(21) Anmeldenummer: 08863388.8
(22) Anmeldetag: 25.11.2008
(51) Int. Cl.: B23B 27/16, B23C 5/22

(54) **WERKZEUG FÜR DIE SPANENDE BEARBEITUNG, INSBESONDERE LANGDREHWERKZEUG**
MACHINING TOOL, PARTICULARLY LONGITUDINAL TURNING TOOL
OUTIL POUR USINAGE PAR ENLÈVEMENT DE COPEAUX, EN PARTICULIER OUTIL POUR TOURNAGE LONGITUDINAL

(30) Priorität: 19.12.2007 DE 102007063199
(43) Veröffentlichungstag der Anmeldung: 25.08.2010
(73) Patentinhaber: Hartmetall-Werkzeugfabrik Paul Horn GmbH, 72072 Tübingen (DE)
(72) Erfinder: OETTLE, Matthias, 72585 Riederich (DE); RUOFF, Uli, 72144 Dusslingen (DE)
(74) Vertreter: Witte, Weller & Partner
(86) Internationale Anmeldenummer: PCT/EP2008/009965
(87) Internationale Veröffentlichungsnummer: WO 2009/077060

(56) Entgegenhaltungen:
- DE-A1- 3 810 259
- GB-A- 1 254 578

## Beschreibung

Die vorliegende Erfindung betrifft ein Werkzeug für die spanende Bearbeitung eines Werkstücks mit einem Werkzeugkörper, einem Schneidwerkzeug und Befestigungsmitteln zum Befestigen des Schneidwerkzeugs in einer Aufnahmevertiefung des Werkzeugkörpers, wobei das Schneidwerkzeug eine Schneide und eine durchgängige Schneidwerkzeugbohrung aufweist und wobei der Werkzeugkörper eine durchgängige, in die Aufnahmevertiefung mündende Werkzeugkörperbohrung aufweist. Die vorliegende Erfindung betrifft insbesondere ein Langdrehwerkzeug.

Bei bekannten Werkzeugen wird das Schneidwerkzeug, beispielsweise eine Schneidplatte, dadurch in der Aufnahmevertiefung des Werkzeugkörpers befestigt, dass in der Werkzeugkörperbohrung ein Innengewinde vorgesehen ist. In dieses Innengewinde greift eine Befestigungsschraube mit einem korrespondierenden Außengewinde ein, die von außen zunächst durch die Schneidwerkzeugbohrung im Schneidwerkzeug und dann in die Werkzeugkörperbohrung eingreift und dann fest angeschraubt wird. Bei Langdrehautomaten, bei denen derartige Werkzeuge, sogenannte Langdrehwerkzeuge, häufig eingesetzt werden, ist jedoch oft wenig Platz vorhanden, um das Schneidwerkzeug, welches ein Verschleißteil ist und häufiger gewechselt werden muss, auszuwechseln, während der Werkzeugkörper in die Werkzeugmaschine eingespannt bleibt. Da die Schraube, mit der das Schneidwerkzeug an dem Werkzeugkörper befestigt ist, bei den bekannten Werkzeugen jedoch nur von einer Seite zugänglich ist, muss folglich zum Wechseln des Schneidwerkzeugs oftmals das gesamte Werkzeug aus der Werkzeugmaschine ausgebaut und nach dem Schneidwerkzeugwechsel wieder eingebaut werden. Dies ist sehr zeitaufwändig und soll erfindungsgemäß vermieden werden.

Derartige Werkzeuge sind beispielsweise aus der DE 38 10 259 A1 und der GB 1 254 578 A bekannt. Die DE 38 10 259 A1 bildet der Oberbegriff von Anspruch 1 und zeigt ein Einstellsystem für Wendeschneidplatten, bei dem die Wendeplattenauflage auf einem Federelement aufliegt, welches eine Höhenverstellung der Wendeschneidplatte ermöglicht. Die Befestigung der Wendeschneidplatte erfolgt dabei über eine Spannschraube und eine Spannbuchse. Die GB 1 254 578 A zeigt dagegen ein Fräswerkzeug, bei dem eine Wendeschneidplatte in eine dafür vorgesehene Ausnehmung des Werkzeugkörpers eingesetzt ist und mittels einer Schrauben-Mutter-Verbindung an diesem befestigt ist. Bei beiden Werkzeugen ist die Schraube zur Befestigung des Schneidwerkzeugs nur von einer Seite aus zugänglich, was zu den oben genannten Probleme führen kann.

Ein Werkzeug, bei dem die Befestigungsmittel zum Befestigen des Schneidwerkzeugs an einem Werkzeugkörper von zwei gegenüberliegenden Seiten aus zugänglich sind und bei dem das oben geschilderte Problem grundsätzlich bereits gelöst ist, ist aus der WO 2003/074217 bekannt. Dort wird zur Befestigung des Schneidwerkzeugs an dem Werkzeugkörper ein spezielles Befestigungselement verwendet, das an seinem vorderen Ende spezielle schraubenförmige Spannflügel aufweist, die mit entsprechenden Stützflügeln innerhalb der Schneidwerkzeugbohrung zusammenwirken nach Art eines Gewindes. Durch Einschrauben dieses Befestigungselements in die Schneidwerkzeugbohrung wird dabei das Schneidwerkzeug an dem Werkzeugkörper befestigt, wobei jedoch das Befestigungselement zum Festschrauben bzw. Lösen von beiden Seiten aus mittels unterschiedlicher Schlüssel gedreht werden kann.

Der vorliegenden Erfindung liegt die Aufgabe zugrunde, ein Werkzeug mit einem austauschbaren Schneidwerkzeug vorzustellen, das ein Anziehen bzw. Lösen der Befestigungsmittel von unterschiedlichen Seiten aus ermöglicht, bei dem die Befestigungsmittel aber einfacher ausgestaltet sind und bei dem, unabhängig von welcher Seite aus die Befestigungsmittel angezogen bzw. gelöst werden, immer dasselbe Hilfswerkzeug benutzt werden kann.

Diese Aufgabe wird durch ein Werkzeug gemäß Anspruch 1 gelöst.

Die oben genannte Aufgabe wird dadurch vollständig gelöst.

Der Erfindung liegt dabei der Gedanke zugrunde, das Werkzeug und insbesondere die Befestigungsmittel so auszugestalten, dass sowohl die Spannbuchse als auch die Spannschraube von beiden Seiten aus in die Schneidwerkzeugbohrung bzw. die Werkzeugkörperbohrung eingesteckt werden können. Je nachdem wie die Befestigungsmittel bei in die Werkzeugmaschine eingespanntem Werkzeug besser zugänglich sind, um die Befestigungsmittel zum Schneidwerkzeugwechsel zu lösen und anschließend wieder anzuziehen, wird die Spannschraube, mit der die Spannbuchse angezogen wird, entweder durch die Schneidwerkzeugbohrung in die Werkzeugkörperbohrung oder alternativ von der anderen Seite aus direkt in die Werkzeugkörperbohrung eingesteckt.

Unabhängig davon, auf welcher Seite die Spannschraube sitzt, wird somit immer nur ein und dasselbe Werkzeug benötigt, um die Spannschraube anzuziehen bzw. zu lösen. Die erfindungsgemäß verwendeten Befestigungsmittel sind ferner sehr einfach und damit kostengünstig herzustellen. An dem Werkzeugkörper selbst ist innerhalb der Werkzeugkörperbohrung nicht, wie bei der konventionell verwendeten Lösung, ein Innengewinde vorgesehen, sondern lediglich eine einfach Bohrung. An dem Schneidwerkzeug ist erfindungsgemäß ebenfalls lediglich eine einfache Bohrung vorgesehen und nicht, wie bei der aus der WO 2003/074217 bekannten Lösung, kompliziert und damit teuer herzustellende Stützflügel, so dass das erfindungsgemäß verwendete, häufigem Verschleiß unterliegende Schneidwerkzeug gegenüber diesem Schneidwerkzeug deutlich kostengünstiger hergestellt werden kann.

In einer bevorzugten Ausgestaltung ist vorgesehen, dass die Verdrehsicherungsmittel einen Sicherungsbolzen aufweisen zum Einstecken in eine in dem Werkzeugkörper vorgesehene, die Werkzeugkörperbohrung tangential berührende oder schneidende Sicherungsbohrung, dass der Sicherungsbolzen einen abgeflachten, im in die Sicherungsbohrung eingesetzten Zustand die Werkstückkörperbohrung tangential berührenden oder schneidenden Außenabschnitt aufweist und dass die Spannbuchse einen korrespondierenden abgeflachten Außenabschnitt aufweist, der im in den Werkzeugkörper eingesetzten Zustand dem abgeflachten Außenabschnitt des Sicherungsbolzens gegenüber liegt und ein Verdrehen der Spannbuchse um ihre Längsachse verhindert. Bei dieser Ausgestaltung wird mit einfachsten Mitteln eine zuverlässige Verdrehsicherung der Spannbuchse realisiert. Diese Sicherungsbohrung verläuft bevorzugt senkrecht zur Werkzeugkörperbohrung, kann grundsätzlich jedoch auch schräg dazu verlaufen. Im eingesetzten Zustand besteht zwischen dem abgeflachten Außenabschnitt des Sicherungsbolzens und dem gegenüber liegenden abgeflachten Außenabschnitt der Spannbuchse bevorzugt ein geringes Spiel, so dass sich die Spannbuchse noch geringfügig verdrehen kann, ein Verdrehen in größerem Maße wird jedoch verhindert. Die Spannbuchse lässt sich dadurch aber leichter einsetzen und entnehmen. Es ist jedoch auch möglich, dass sich die abgeflachten Außenabschnitte unmittelbar berühren.

Grundsätzlich reicht es aus, wenn ein Teil der Spannbuchse und/oder des Sicherungsbolzens entsprechend abgeflacht ist, wobei diese Teile so an der Spannbuchse bzw. dem Sicherungsbolzen angeordnet sind, dass sie sich bei eingesetztem Zustand gegenüber liegen. Bevorzugt ist jedoch insbesondere aufgrund einer einfacheren Herstellung vorgesehen, dass der Sicherungsbolzen und/oder die Spannbuchse den abgeflachten Außenabschnitt entlang einer gesamten Längsseite oder einem Großteil einer Längsseite aufweisen. Ferner ist bevorzugt vorgesehen, dass der Spannbolzen vormontiert ist und auch beim Wechseln des Schneidwerkzeugs montiert bleibt.

Grundsätzlich gibt es eine Reihe von Möglichkeiten, ein Verdrehen der Spannbuchse beim Anziehen bzw. Lösen der Spannschraube zu verhindern. In einer Weiterbildung ist dazu vorgesehen, dass die Verdrehsicherungsmittel und zumindest ein Teil der Werkzeugkörperbohrung einen Querschnitt aufweisen, der ein Verdrehen der Spannbuchse im in den Werkzeugkörper eingesetzten Zustand verhindert. Auch dies stellt eine technisch einfache und damit kostengünstig zu realisierende Möglichkeit dar, die in Ergänzung zu dem oben beschriebenen Sicherungsbolzen oder alternativ dazu Verwendung finden kann. Insbesondere ist vorgesehen, dass die Verdrehsicherungsmittel und zumindest ein Teil des Werkzeugkörpers einen nicht kreisförmigen Querschnitt, insbesondere einen ovalen, eckigen oder zumindest an einer Seite abgeflachten Querschnitt aufweisen. Jede Form des Querschnitts, der auf sichere Weise ein Verdrehen der Spannbuchse beim Anziehen bzw. Lösen verhindert, kann dabei grundsätzlich verwendet werden.

Um die Spannschraube anzuziehen bzw. lösen zu können, ist ferner vorgesehen, dass die Spannschraube stirnseitig einen Werkzeugeingriff aufweist, beispielsweise einen Einsatz zum Aufnehmen eines Steckschlüssels, beispielsweise eines Inbusschlüssels oder eines Torxschlüssels.

Ferner ist in einer Weiterbildung vorgesehen, dass die Werkzeugkörperbohrung derart angeordnet ist, dass deren Bohrungsachse bei in die Aufnahmevertiefung eingesetztem, aber noch nicht verschraubtem Schneidwerkzeug geringfügig versetzt zu der Bohrungsachse der Schneidwerkzeugbohrung verläuft. Beim Anziehen der Spannschraube wird dann das Schneidwerkzeug nicht nur in Richtung der Bohrungsachse der Werkzeugkörperbohrung festgezogen, sondern auch geringfügig in einer Richtung quer zu, bevorzugt in einer Richtung weg von der eingesetzten Schneide und hin zu den Anlageflächen in der Aufnahmevertiefung, um so das Schneidwerkzeug fest in der Aufnahmevertiefung zu verklemmen.

Es sei erwähnt, dass die oben beschriebenen und nachfolgend noch zu beschreibenden Merkmale der vorliegenden Erfindung nicht nur in den konkret genannten Kombinationen, sondern in beliebig anderen Kombinationen ebenfalls Verwendung finden können.

Die Erfindung wird nachfolgend anhand der Zeichnung näher erläutert. Es zeigen:
- Fig. 1: eine erste Ausgestaltung des erfindungsgemäßen Werkzeugs in zerlegtem Zustand,
- Fig. 2: eine erfindungsgemäß verwendete Spannbuchse im Querschnitt,
- Fig.3: die Werkzeugkörperbohrung und die Spannbuchse im Längsschnitt und die Sicherungsbohrung im Querschnitt,
- Fig. 4: die erste Ausgestaltung des erfindungsgemäßen Werkzeugs in zusammengebautem Zustand in einer ersten Seitenansicht,
- Fig. 5: die erste Ausgestaltung des erfindungsgemäßen Werkzeugs in zusammengebautem Zustand in einer zweiten Seitenansicht,
- Fig. 6: eine zweite Ausgestaltung des erfindungsgemäßen Werkzeugs in zerlegtem Zustand, und
- Fig. 7: eine dritte Ausgestaltung des erfindungsgemäßen Werkzeugs in zerlegtem Zustand.

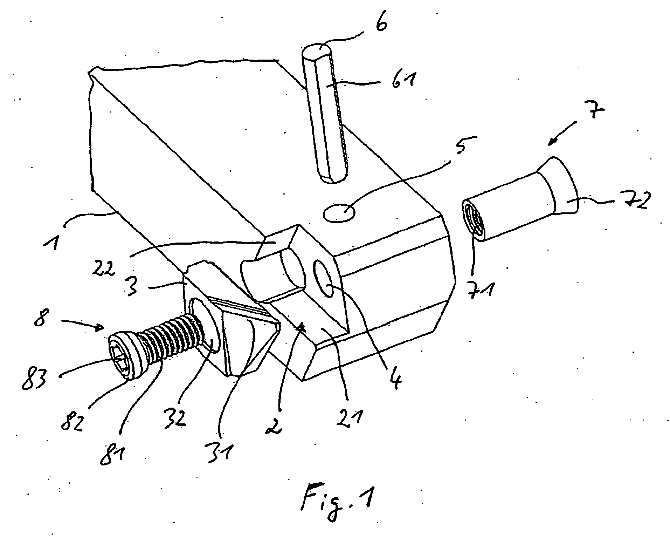

Fig. 1 zeigt eine erste Ausgestaltung des erfindungsgemäßen Werkzeugs in zerlegtem Zustand. Erkennbar ist der Werkzeugkörper 1, an dessen vorderem seitlichem Ende eine Aufnahmevertiefung 2 vorgesehen ist zur Aufnahme eines Schneidwerkzeugs 3. Im vorderen Bereich des Werkzeugkörpers 1 ist quer eine in die Aufnahmevertiefung 2 mündende Werkzeugkörperbohrung 4 vorgesehen. Ferner ist quer zur Werkzeugkörperbohrung 4, bei diesem Ausführungsbeispiel rechtwinklig dazu verlaufend und die Werkzeugkörperbohrung 4 schneidend, eine Sicherungsbohrung 5 zur Aufnahme eines Sicherungsstifts bzw. Sicherungsbolzens 6 angeordnet.

Das Schneidwerkzeug 3, vorliegend eine Wendeschneidplatte mit zwei Schneiden 31 (die hintere Schneide ist in dieser Darstellung nicht erkennbar), weist zentral eine durchgängige Schneidwerkzeugbohrung 32 auf.

Als Befestigungsmittel zum Befestigen des Schneidwerkzeugs 3 in der Aufnahmevertiefung 2 sind erfindungsgemäß eine Spannbuchse 7 und eine Spannschraube 8 vorgesehen. Die Spannbuchse 7 weist dabei ein Innengewinde 71 und einen Senkkopf 72 auf. Die Spannschraube 8 weist ein mit dem Innengewinde 71 der Spannbuchsc 7 korrespondierendes Außengewinde 81 und ebenfalls einen Senkkopf 82 auf, der dem Senkkopf 72 sehr ähnlich oder identisch ausgestaltet sein kann. Ferner ist an der Stirnseite ein Werkzeugeingriff 83, beispielsweise ein Inbuseinsatz zum Aufnehmen eines Inbusschlüssels zum Drehen der Spannschraube 8 vorgesehen.

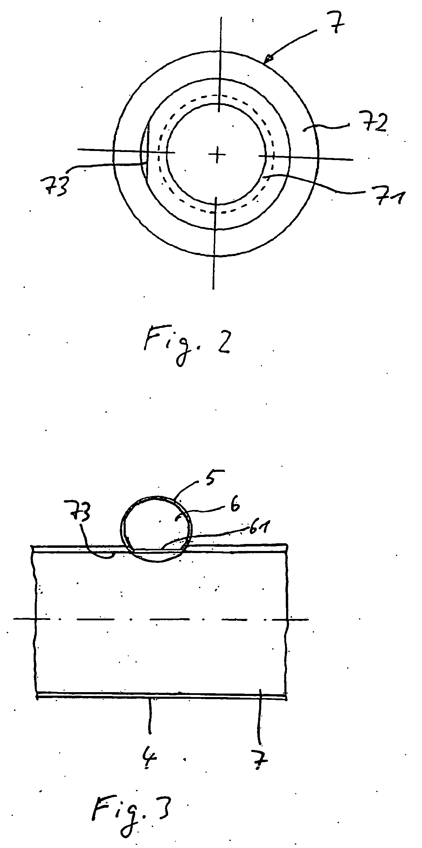

Die Werkzeugkörperbohrung 4 und die Schneidwerkzeugbohrung 32 sind so ausgestaltet, dass die Spannbuchse 7 in beide Bohrungen passend eingesetzt werden kann. Um das Schneidwerkzeug 3 an dem Werkzeugkörper 1 zu befestigen, wird zunächst die Spannbuchse 7 auf der der Aufnahmevertiefung 2 abgewandten Seite in die Werkzeugkörperbohrung 4 eingesteckt. Bevorzugt ist der Sicherungsbolzen 6 dabei vormontiert und bereits in die Sicherungsbohrung 5 eingesteckt, die so ausgestaltet ist, dass der Sicherungsbolzen 6 nicht von allein herausfällt. Der Sicherungsbolzen 6 dient als Verdrehsicherung für die Spannbuchse 7. Dazu weist der Sicherungsbolzen 6 eine abgeflachte Längsseite 61 auf, die in eingesetztem Zustand zu der Werkzeugkörperbohrung 4 hin weist und diese bevorzugt schneidet. Die Spannbuchse 7 weist eine entsprechende Abflachung 73 (vgl. den in Fig. 2 gezeigten Querschnitt des Spannbuchse 7) auf, die in eingesetztem Zustand mit der abgeflachten Längsseite 61 des Sicherungsbolzens 6 in Berührung steht oder nur durch einen kleinen Luftspalt von dieser getrennt ist, wodurch verhindert wird, dass sich die Spannbuchse 7 in größerem Maße um ihre Längsachse drehen kann, wenn der Sicherungsbolzen 6 in die Sicherungsbohrung 5 eingesetzt ist, so dass allenfalls eine geringfügige Verdrehung möglich ist.

Danach wird das Schneidwerkzeug 3 in die Aufnahmevertiefung 2 eingesetzt und die Spannschraube 8 durch die Schneidwerkzeugbohrung 32 hindurch in die Werkzeugkörperbohrung 4 und dort in die Spannbuchse 7 eingesteckt. Anschließend wird die Spannschraube 8 mit der Spannbuchse 7 mittels eines (nicht gezeigten) Hilfswerkzeugs verschraubt. Dabei wird das Schneidwerkzeug 3 bevorzugt noch etwas in die Aufnahmevertiefung 2 hinein, also zu den Anlageflächen 21 und 22 hin, verschoben, da bevorzugt die Werkzeugkörperbohrung 4 bzw. die Schneidwerkzeugbohrung 32 leicht exzentrisch zueinander liegen, solange die Spannschraube 8 mit der Spannbuchse 7 noch nicht fest verschraubt ist.

Fig. 3 zeigt vergrößert die Werkzeugkörperbohrung 4 und einen Teil der Spannbuchse 7 im Längsschnitt und die Sicherungsbohrung 5 im Querschnitt. Erkennbar ist darin, dass die Sicherungsbohrung 5 die Werkzeugkörperbohrung 4 schneidet und dass auch der abgeflachte Außenabschnitt 61 des Sicherungsbolzens 6 in die Werkzeugkörperbohrung 4 hinein ragt. Ferner ist erkennbar, dass sich der abgeflachte Außenabschnitt 61 des Sicherungsbolzens 6 und der abgeflachte Außenabschnitt 73 der Spannbuchse 7 in der eingesetzten Position nicht direkt berühren, sondern durch einen kleinen Luftspalt getrennt sind, so dass die Spannbuchse 7 noch etwas Spiel hat, um sie leichter einstecken und entnehmen zu können.

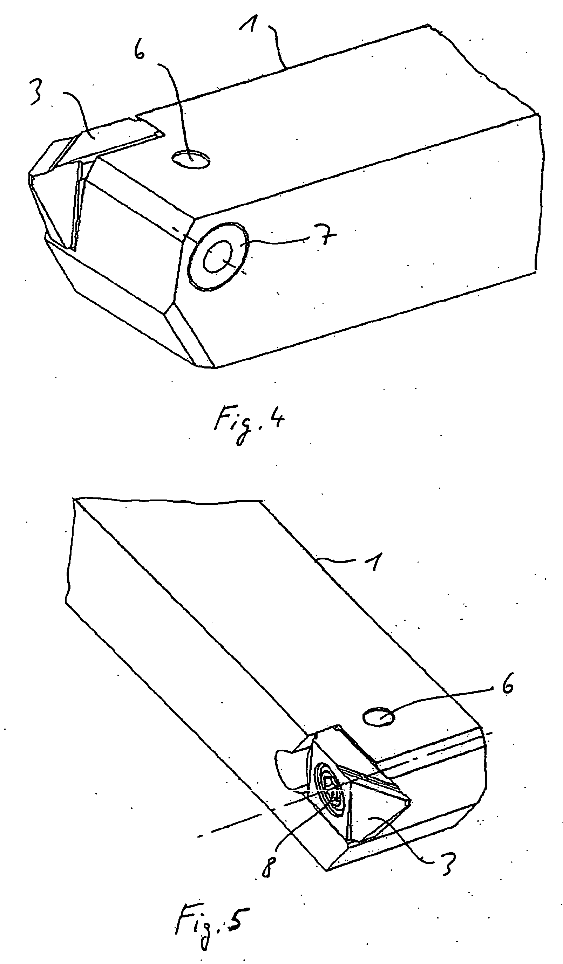

Eine erste Seitenansicht der ersten Ausgestaltung des erfindungsgemäßen Werkzeugs ist in Fig. 4 gezeigt, eine zweite Seitenansicht davon ist in Fig. 5 gezeigt.

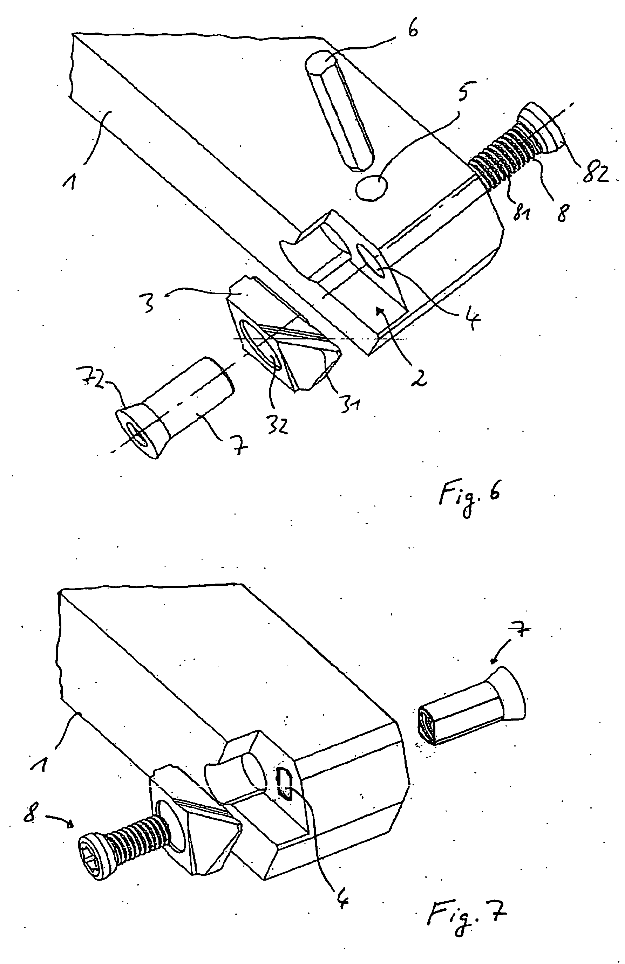

Die erste Ausgestaltung des erfindungsgemäßen Werkzeugs kommt dann zum Einsatz, wenn zum Wechseln des Schneidwerkzeugs 3 das Werkzeug von der Seite aus zugänglich ist, auf der das Schneidwerkzeug 3 angeordnet ist, da das Hilfswerkzeug ja in den Werkzeugeingriff 83 der Spannschraube 8 eingreifen muss, um diese zu lösen. Wenn jedoch auf dieser Seite nicht ausreichend Platz vorhanden ist, was insbesondere bei Langdrehautomaten häufiger der Fall sein kann, besteht alternativ die Möglichkeit, dieselben Bauteile des Werkzeugs in einer zweiten Ausgestaltung zu verwenden, wie sie in Fig. 6 für den zerlegten Zustand gezeigt ist. Darin sind gleiche Teile mit gleichen Bezugziffem versehen.

Wie unschwer erkennbar ist, ist die Spannbuchse 7 nun auf der Seite des Schneidwerkzeugs 3 angeordnet und greift durch die Schneidwerkzeugbohrung 32 hindurch in die Werkzeugkörperbohrung 4 ein. Von der anderen Seite aus greift die Spannschraube 8 in die Werkzeugkörperbohrung 4 ein und ist mit der Spannbuchse 7 mit Hilfe des (nicht gezeigten) Hilfswerkzeugs von dieser anderen Seite aus verschraubt.

Das erfindungsgemäße Werkzeug bietet also die Möglichkeit, die Befestigungselemente variabel und von unterschiedlichen Seiten aus zu verwenden, um damit den vorhandenen Möglichkeiten in Bezug auf die Zugänglichkeit bei in eine Werkzeugmaschine eingespanntem Zustand des Werkzeugs Rechnung zu tragen. Die Befestigungsmittel sind dabei sehr einfach ausgestaltet und dadurch kostengünstig herzustellen. Auch der Werkzeugkörper selbst und das Schneidwerkzeug müssen keine besonderen Mittel aufweisen, sondern sind zur Verwendung mit den erfindungsgemäßen Befestigungsmitteln nur mit sehr einfachen Bohrungen zu versehen.

Eine weitere Ausgestaltung eines erfindungsgemäßen Werkzeugs ist in Fig. 7 gezeigt. Dort ist insbesondere die Verdrehsicherung anders gelöst. Statt des in den Fig. 1 und 5 gezeigten Sicherungsbolzens 6 sind bei dieser Ausgestaltung die Werkzeugkörperbohrung 4 und die Spannbuchse 7 anders ausgestaltet. Diese weisen nämlich bei dieser Ausgestaltung einen von der Kreisform abweichenden Querschnitt auf. Bei der gezeigten Ausgestaltung ist der Querschnitt der Werkzeugkörperbohrung 4 und des Spannbuchse 7 an zwei gegenüberliegenden Seiten gleichermaßen und zueinander passend abgeflacht. Dadurch kann die Spannbuchse 7 nur in einer bzw. in zwei verschiedenen Positionen in die Werkzeugkörperbohrung 4 eingeführt werden und sitzt dort verdrehsicher fest. Ein zusätzlicher Sicherungsbolzen kann, wie in den in den Fig. 1 bis 5 gezeigten Ausgestaltungen erläutert, zusätlich vorgesehen werden, ist grundsätzlich jedoch nicht erforderlich. Es versteht sich, dass der Querschnitt der Werkzeugkörperbohrung 4 und der Spannbuchse 7 auch anders gestaltet sein können, solange ein Verdrehen der Spannbuchse 7 in der Werkzeugkörperbohrung 4 sicher verhindert wird.

Die vorliegende Erfindung ist nicht auf die gezeigten Ausgestaltungen beschränkt. Eine Vielzahl weiterer Variationen ist denkbar. Insbesondere ist die Erfindung nicht auf die Verwendung bei einem Langdrehwerkzeug, wie es in den Figuren gezeigt ist, beschränkt. Es versteht sich, dass andere Werkzeuge diese Erfindung verwenden können. Auch die Art, Größe und Anordnung des Schneidwerkzeugs wirkt sich ebenso wenig einschränkend auf den Schutzumfang der vorliegenden Erfindung aus wie die Art, Größe und Ausgestaltung des Werkzeugkörpers.

## Patentansprüche

1. Werkzeug für die spanende Bearbeitung eines Werkstücks mit einem Werkzeugkörper (1), einem Schneidwerkzeug (3) und Befestigungsmitteln (7, 8) zum Befestigen des Schneidwerkzeugs (3) in einer Aufnahmevertiefung (2) des Werkzeugkörpers (1), wobei das Schneidwerkzeug (3) eine Schneide (31) und eine durchgängige Schneidwerkzeugbohrung (32) aufweist und wobei der Werkzeugkörper (1) eine durchgängige, in die Aufnahmevertiefung (2) mündende Werkzeugkörperbohrung (4) aufweist, wobei die Befestigungsmittel eine mit einem Innengewinde (71) versehene Spannbuchse (7) und eine mit einem mit dem Innengewinde (71) der Spannbuchse (7) korrespondierenden Außengewinde (81) versehene Spannschraube (8) aufweisen, die zur Befestigung des Schneidwerkzeugs (3) an dem Werkzeugkörper (1) von gegenüberliegenden Seiten aus in die Schneidwerkzeugbohrung (32) bzw. die Werkzeugkörperbohrung (4) eingesteckt und miteinander verschraubt sind, **dadurch gekennzeichnet, dass** die Spannschraube (8) dazu sowohl durch die Schneidwerkzeugbohrung (32) hindurch in die Werkzeugkörperbohrung (4) einsetzbar und mit der Spannbuchse (7) verschraubbar ist als auch von der gegenüberliegenden Seite durch die Werkzeugkörperbohrung (4) hindurch in die Schneidwerkzeugbohrung (32) einsetzbar und mit der Spannbuchse (7) verschraubbar ist, dass die Spannbuchse (7), unabhängig ob sie in die Schneidwerkzeugbohrung (32) oder in die Werkzeugkörperbohrung (4) eingesetzt ist, mit der Spannschraube (8) direkt verschraubt ist, und dass Verdrehsicherungsmittel (5, 6) vorgesehen sind zur Verhinderung eines Verdrehens der Spannbuchse (7) um ihre Längsachse beim Verschrauben und Lösen mittels der Spannschraube (8).

2. Werkzeug nach Anspruch 1, **dadurch gekennzeichnet, dass** die Verdrehsicherungsmittel einen Sicherungsbolzen (6) aufweisen zum Einstecken in eine in dem Werkzeugkörper (1) vorgesehene, die Werkzeugkörperbohrung (4) tangential berührende oder schneidende Sicherungsbohrung (5), dass der Sicherungsbolzen (6) einen abgeflachten, im in die Sicherungsbohrung (5) eingesetzten Zustand die Werkzeugkörperbohrung (4) tangential berührenden oder schneidenden Außenabschnitt (61) aufweist und dass die Spannbuchse (7) einen korrespondierenden abgeflachten Außenabschnitt (73) aufweist, der im in den Werkzeugkörper (1) eingesetzten Zustand dem abgeflachten Außenabschnitt (61) des Sicherungsbolzens (6) gegenüber liegt und ein Verdrehen der Spannbuchse (7) um ihre Längsachse verhindert.

3. Werkzeug nach Anspruch 2, **dadurch gekennzeichnet, dass** die Sicherungsbohrung (5) senkrecht zur Werkzeugkörperbohrung (4) verläuft.

4. Werkzeug nach einem der Ansprüche 2 oder 3, **dadurch gekennzeichnet, dass** der Sicherungsbolzen (6) und/oder der Spannbuchse (7) den abgeflachten Außenabschnitt (71, 73) entlang einer gesamten Längsseite oder einem Großteil einer Längsseite aufweisen.

5. Werkzeug nach einem der vorstehenden Ansprüche, **dadurch gekennzeichnet, dass** die Verdrehsicherungsmittel und zumindest ein Teil der Werkzeugkörperbohrung (4) einen Querschnitt aufweisen, der ein Verdrehen der Spannbuchse (7) im in den Werkzeugkörper (1) eingesetzten Zustand verhindert.

6. Werkzeug nach Anspruch 5, **dadurch gekennzeichnet, dass** die Verdrehsicherungsmittel und zumindest ein Teil des Werkzeugkörpers (1) einen nicht kreisförmigen Querschnitt, insbesondere einen ovalen, eckigen oder zumindest an einer Seite abgeflachten Querschnitt aufweisen.

7. Werkzeug nach einem der vorstehenden Ansprüche, **dadurch gekennzeichnet, dass** die Spannschraube (8) stirnseitig einen Werkzeugeingriff (83) aufweist.

8. Werkzeug nach einem der vorstehenden Ansprüche, **dadurch gekennzeichnet, dass** die Werkzeugkörperbohrung (4) derart angeordnet ist, dass deren Bohrungsachse bei in die Aufnahmevertiefung (2) eingesetztem, aber noch nicht verschraubtem Schneidwerkzeug (3) geringfügig versetzt zu der Bohrungsachse der Schneidwerkzeugbohrung (32) verläuft.

## Claims

1. A tool for machining a workpiece, comprising a tool body (1), a cutting tool (3), and fastening means (7,8) for fastening the cutting tool (3) in a receiving recess (2) of the tool body (1), the cutting tool (3) having a cutting edge (31) and a cutting-tool through-bore (32), and the tool body (1) having a tool-body through-bore (4) that opens into the receiving recess (2), wherein
the fastening means comprises a clamping bushing (7), that is provided with an internal thread (71), and a clamping screw (8), that is provided with an external thread (81) corresponding to the internal thread (71) of the clamping bushing (7), which are inserted into the cutting-tool bore (32) or into the tool-body bore (4) from opposing sides in order to fasten the cutting tool (3) to the tool body (1) and which are screwed together, **characterized in that** the clamping screw (8) can therefor be inserted into the tool-body bore (4) through the cutting-tool bore (32) and can be screwed with the clamping bushing (7) as well as can be inserted from the opposing side through tool-body bore (4) into the cutting-tool bore (32) and can be screwed with the clamping bushing (7), that the clamping bushing (7) is screwed directly to the clamping screw (8), irrespective of whether it is inserted into the cutting-tool bore (32) or into the tool-body bore (4), and that anti-rotation means (5, 6) are provided to prevent the clamping bushing (7) from rotating about its longitudinal axis when being screwed and undone by means of the clamping screw (8).

2. The tool as claimed in claim 1, **characterized in that** the anti-rotation means have a securing bolt (6) for insertion into a securing bore (5) that is provided in the tool body (1) and contacts tangentially or intersects the tool-body bore (4); the securing bolt (6) has a flattened outer portion (61) that, when the securing bolt has been inserted into the securing bore (5), contacts tangentially or intersects the tool-body bore (4), and the clamping bushing (7) has a corresponding flattened outer portion (73) that, when the clamping bushing has been inserted into the tool body (1), is located opposite the flattened outer portion (61) of the securing bolt (6) and prevents the clamping bushing (7) from rotating about its longitudinal axis.

3. The tool as claimed in claim 2, **characterized in that** the securing bore (5) extends perpendicularly relative to the tool-body bore (4).

4. The tool as claimed in either one of claims 2 or 3, **characterized in that** the securing bolt (6) and/or the clamping bushing (7) has/have the flattened outer portion (71, 73) along an entire longitudinal side or along a large portion of a longitudinal side.

5. The tool as claimed in any one of the preceding claims, **characterized in that** the anti-rotation means and at least a portion of the tool-body bore (4) have a cross-section that prevents rotation of the clamping bushing (7) when it has been inserted into the tool body (1).

6. The tool as claimed in claim 5, **characterized in that** the anti-rotation means and at least a portion of the tool body (1) have a non-circular cross-section, in particular an oval or angular cross-section, or a cross-section flattened on at least one side.

7. The tool as claimed in any one of the preceding claims, **characterized in that** the clamping screw (8) has, at its end face, a tool engagement means (83).

8. The tool as claimed in any one of the preceding claims, **characterized in that** the tool-body bore (4) is arranged in such a way that, when the cutting tool (3) has been inserted into the receiving recess (2) but has not yet been screwed, the bore axis of the tool-body bore extends with a slight offset in relation to the bore axis of the cutting-tool bore (32).

## Revendications

1. Outil pour usinage par enlèvement de copeaux d'une pièce, avec un corps d'outil (1), un outil de coupe (3) et des moyens de fixation (7, 8) pour fixer l'outil de coupe (3) dans une cavité de réception (2) du corps d'outil (1), dans lequel l'outil de coupe (3) présente une arête vive (31) et un alésage d'outil de coupe traversant (32) et dans lequel le corps d'outil (1) présente un alésage de corps d'outil traversant (4) débouchant dans la cavité de réception (2), dans lequel les moyens de fixation présentent une douille de serrage (7) dotée d'un filet intérieur (71) et une vis de serrage (8) dotée d'un filet extérieur (81) correspondant au filet intérieur (71) de la douille de serrage (7), qui sont engagées par des côtés opposés dans l'alésage d'outil de coupe (32) ou dans l'alésage de corps d'outil (4) et vissées l'une dans l'autre pour la fixation de l'outil de coupe (3) sur le corps d'outil (1), **caractérisé en ce que** la vis de serrage (8) peut à cet effet aussi bien être introduite dans l'alésage de corps d'outil (4) à travers l'alésage d'outil de coupe (32) et vissée avec la douille de serrage (7) qu'introduite par le côté opposé dans l'alésage d'outil de coupe (32) à travers l'alésage de corps d'outil (4) et vissée avec la douille de serrage (7), **en ce que** la douille de serrage (7), indépendamment du fait qu'elle est introduite dans l'alésage d'outil de coupe (32) ou dans l'alésage de corps d'outil (4), est vissée directement avec la vis de serrage (8), et **en ce qu'**il est prévu des moyens de blocage de rotation (5, 6) pour empêcher une rotation de la douille de serrage (7) autour de son axe longitudinal lors du serrage et du desserrage au moyen de la vis de serrage (8).

2. Outil selon la revendication 1, **caractérisé en ce que** les moyens de blocage de rotation présentent une broche de blocage (6) à introduire dans un alésage de blocage (5) prévu dans le corps d'outil (1), touchant tangentiellement ou coupant l'alésage de corps d'outil (4), **en ce que** la broche de blocage (6) présente une partie extérieure (61) aplatie, touchant tangentiellement ou coupant l'alésage de corps d'outil (4) dans l'état introduit dans l'alésage de blocage (5), et **en ce que** la douille de serrage (7) présente une partie extérieure aplatie correspondante (73) qui, dans l'état introduit dans le corps d'outil (1), est située en face de la partie extérieure aplatie (61) de la broche de blocage (6) et empêche une rotation de la douille de serrage (7) autour de son axe longitudinal.

3. Outil selon la revendication 2, **caractérisé en ce que** l'alésage de blocage (5) s'étend perpendiculairement à l'alésage de corps d'outil (4).

4. Outil selon l'une des revendications 2 ou 3, **caractérisé en ce que** la broche de blocage (6) et/ou la douille de serrage (7) présentent la partie extérieure aplatie (71, 73) le long de tout un côté longitudinal ou d'une grande partie d'un côté longitudinal.

5. Outil selon l'une quelconque des revendications précédentes, **caractérisé en ce que** les moyens de blocage de rotation et au moins une partie de l'alésage de corps d'outil (4) présentent une section transversale, qui empêche une rotation de la douille de serrage (7) dans l'état introduit dans le corps d'outil (1).

6. Outil selon la revendication 5, **caractérisé en ce que** les moyens de blocage de rotation et au moins une partie du corps d'outil (1) présentent une section transversale non circulaire, en particulier une section transversale ovale, polygonale ou aplatie sur au moins un côté.

7. Outil selon l'une quelconque des revendications précédentes, **caractérisé en ce que** la vis de serrage (8) présente en face frontale une zone d'application d'outil (83).

8. Outil selon l'une quelconque des revendications précédentes, **caractérisé en ce que** l'alésage de corps d'outil (4) est disposé de telle manière que son axe d'alésage soit légèrement déplacé vers l'axe d'alésage de l'alésage d'outil de coupe (32) lorsque l'outil de coupe (3) est engagé mais pas encore serré dans la cavité de réception (2).
